# EUROPÄISCHE PATENTANMELDUNG

(11) **EP 4 173 972 A1**
(43) Veröffentlichungstag der Anmeldung: **03.05.2023**
(21) Anmeldenummer: 22203760.8
(22) Anmeldetag: 26.10.2022
(51) Int. Cl.: B64G 1/40, B64G 1/50, F02K 7/00, F17C 1/00

(54) **RAUMFAHRZEUGTANK MIT WÄRMETAUSCHER, RAUMFAHRZEUG UND VERFAHREN ZUM KÜHLEN EINES TANKINHALTS**

(30) Priorität: 02.11.2021 DE 102021128437
(71) Anmelder: ArianeGroup GmbH, 82024 Taufkirchen (DE)
(72) Erfinder: Wendt, Dr. Christian, 28199 Bremen (DE); Isselhorst, Dr. Armin, 28199 Bremen (DE); Konopka, Dr.-Ing. Martin, 28199 Bremen (DE)
(74) Vertreter: Marschall, Stefan

(57) **Zusammenfassung**

Offenbart ist ein Raumfahrzeugtank 100 für Wasserstoff. Der Raumfahrzeugtank 100 weist ein Druckentlastungssystem 20 zum Ablassen von gasförmigem Wasserstoff W_{g} aus einem Tankraum T auf, das einen in mindestens einem Abschnitt in den Tankraum T hineinragenden Wärmetauscher 21 mit einem Para-Ortho-Katalysator zur beschleunigten Umwandlung von Parain Ortho-Wasserstoff umfasst. Weiterhin offenbart ist ein Raumfahrzeug mit einem Wasserstoffantrieb und einem entstandenen solchen Raumfahrzeug 100.

Offenbart ist weiterhin ein Verfahren zum Kühlen eines Tankinhalts mit flüssigem Wasserstoff W_{f} und gasförmigem Wasserstoff W_{g} in einem Tankraum T eines Raumfahrzeugtanks 100, der ein Druckentlastungssystem 20 mit einem in mindestens einem Abschnitt in den Tankraum T hineinragenden, einen Para-Ortho-Katalysator zur beschleunigten Umwandlung von Para- in Ortho-Wasserstoff aufweisenden Wärmetauscher 21 umfasst. Das Verfahren umfasst ein Umwandeln von Para-Wasserstoff in Ortho-Wasserstoff mittels des Wärmetauschers 21 sowie ein Ablassen mindestens eines Teils eines bei der Umwandlung entstehenden Wasserstoffgemischs.

## Beschreibung

Die vorliegende Erfindung betrifft einen Raumfahrzeugtank für Wasserstoff. Darüber hinaus betrifft die Erfindung ein Raumfahrzeug mit einem derartigen Raumfahrzeugtank sowie ein Verfahren zum Kühlen eines Tankinhalts in einem Raumfahrzeugtank.

Wasserstoff findet insbesondere als Energieträger in Industrie und Technik vielfältige Anwendungen. Üblicherweise besteht er aus Ortho-Wasserstoff und Para-Wasserstoff, deren jeweilige Moleküle sich durch einen Spin ihrer Atomkerne unterscheiden. Das natürlicherweise sich mit der Zeit einstellende Gleichgewichtsverhältnis ist dabei temperaturabhängig: Während der Para-Wasserstoff-Anteil bei Temperaturen bis zum Normalsiedepunkt von rund 20K annähernd 100% beträgt, wächst mit steigender Temperatur der Anteil an Ortho-Wasserstoff und beträgt ab einer Temperatur von etwa 250K rund 75%. Die Umwandlung von Para- in Ortho-Wasserstoff ist dabei endotherm, die umgekehrte Umwandlung demnach exotherm. Beide Umwandlungen erfolgen natürlicherweise langsam, können jedoch durch Katalysatoren beschleunigt werden. In Tanks wird üblicherweise fast ausschließlich Para-Wasserstoff gelagert.

Wie auch bei anderen kryogenen Flüssigkeiten ist die Lagerung von flüssigem Wasserstoff in mobilen wie auch in stationären Tanks jedoch problematisch, weil es bei Wärmeeintrag in den jeweiligen Tank zur Abdampfung des flüssigen Wasserstoffs kommt, wodurch sich der Tankdruck erhöht.

Dem wird üblicherweise zum einen mit verschiedenen Tankisolierungsmaßnahmen teilweise vorgebeugt, zum anderen wird standardmäßig der bei einer solchen Verdampfung entstandene gasförmige Wasserstoff zumindest teilweise über ein Druckentlastungssystem in die Umgebung geleitet und so eine Druckverringerung bewirkt.

Für Anwendungen am Boden sind zur Verringerung der Abdampfverluste für stationäre Flüssigwasserstofftanks tankinterne Wärmetauscher als Teil des Entlüftungssystems bekannt (siehe die Internetveröffentlichung "Heisenberg Vortex Tube for Cooling and Liquefaction" unter https://www.hydrogen.energy.gov/pdfs/review20/in015_leachman_2020_o. pdf), die unter Zuhilfenahme der katalytisch beschleunigten endothermen Para-Ortho-Umwandlung eine Kühlung bewirken. Auch im Automotivbereich werden tankinterne Katalysatoren für die endotherme Para-Ortho-Umwandlung eingesetzt; derartige Tanksysteme sind aus der US 2009/0199574 A1 und der US 2011/0302933 A1 bekannt. Der Wasserstoff kann dabei durch Physisorption an porösen Einsätzen im Tankinneren gebunden sein. Der Tankdruck liegt bei solchen Anwendungen zumeist weit über dem kritischen Druck von Wasserstoff.

In der Raumfahrt wird Wasserstoff vornehmlich in Niederdrucktanks in flüssigem Zustand bei etwa 20K und Drücken deutlich unter dem kritischen Druck von etwa 13 bar bevorratet, was zu hohen Energiedichten führt und leichte Bauformen erlaubt.

Aus der DE 10 2016 103 223 A1 ist für Raumfahrtanwendungen die Verwendung eines Wärmetauschers zur Kühlung von Treibstoff für ein Triebwerk bekannt. In der Internetveröffentlichung "Cryogenic Fluid Management Investments Overview" unter https://www.nasa.gov/sites/default/files/atoms/files/jsheehy_propuls ion_july_2016tagged_0.pdf sind tankinterne Wärmetauscher als Teil des Entlüftungssystems beschrieben, die bei fehlender Auftriebsströmung in der ballistischen Phase mittels Ventilatoren angeblasen werden. Dabei dient hier zur Kühlung des Gases der im Wärmtauscher verdampfende flüssige Wasserstoff aus der Bevorratung.

Der vorliegenden Erfindung liegt die Aufgabe zugrunde, eine verbesserte Technik
zur Verringerung von Abdampfverlusten von Flüssigwasserstofftanks in der Raumfahrt bereitzustellen.

Die Aufgabe wird gelöst durch einen Raumfahrzeugtank gemäß Anspruch 1, ein Raumfahrzeug nach Anspruch 6 und ein Verfahren gemäß Anspruch 7. Vorteilhafte Ausführungsformen sind in den Unteransprüchen, der Beschreibung und den Figuren offenbart.

Ein erfindungsgemäßer Raumfahrzeugtank dient der Aufnahme von Wasserstoff. Er weist ein Druckentlastungssystem zum Ablassen von gasförmigem Wasserstoff aus einem Tankraum auf. Das Druckentlastungssystem umfasst dabei einen Wärmetauscher mit einem Para-Ortho-Katalysator zur beschleunigten Umwandlung von Para- in Ortho-Wasserstoff, wobei der Wärmetauscher mindestens einen in den Tankraum hineinragenden Abschnitt aufweist.

Ein erfindungsgemäßes Raumfahrzeug umfasst einen Wasserstoffantrieb (also ein Triebwerk, das dazu eingerichtet ist, mit Wasserstoff als Treibstoffkomponente betrieben zu werden) und zu dessen Versorgung einen Raumfahrzeugtank gemäß einer Ausführungsform der vorliegenden Erfindung. Es kann insbesondere als eine Raketenoberstufe ausgebildet sein.

Ein erfindungsgemäßes Verfahren dient einem Kühlen eines flüssigen und gasförmigen Wasserstoff umfassenden Tankinhalts in einem Tankraum eines Raumfahrzeugtanks. Der Raumfahrzeugtank weist dabei ein Druckentlastungssystem auf, das einen Wärmetauscher mit einem Para-Ortho-Katalysator zur katalytisch beschleunigten Umwandlung von Para- in Ortho-Wasserstoff umfasst, wobei der Wärmetauscher zumindest einen in den Tankraum hineinragenden Abschnitt aufweist. Das Verfahren umfasst ein Umwandeln von Para-Wasserstoff in Ortho-Wasserstoff mittels des Wärmetauschers sowie ein Ablassen mindestens eines Teils eines bei der Umwandlung entstehenden Wasserstoffgemischs (aus Para- und Ortho-Wasserstoff) mittels des Druckentlastungssystems.

Insbesondere ist der Raumfahrzeugtank dabei vorzugsweise gemäß einer der in dieser Schrift offenbarten Ausführungsformen eines erfindungsgemäßen Raumfahrzeugtanks ausgebildet. Gemäß vorteilhaften Ausführungsformen eines erfindungsgemäßen Verfahrens weist der gasförmige Wasserstoff des Tankinhalts beim Umwandeln eine Temperatur im Bereich von 50K bis 200K auf. Vorzugsweise erfolgt das Umwandeln nach einer Schubphase und/oder während einer ballistischen (antriebslosen) Flugphase eines den Raumfahrzeugtank umfassenden Raumfahrzeugs.

Vermöge des in mindestens einem Abschnitt in den Raumfahrzeugtank hineinragenden Wärmetauschers mit Para-Ortho-Katalysator ermöglicht die vorliegende Erfindung eine effektive Kühlung des den Wärmetauscher mindestens teilweise umgebenden Tankinhalts, indem diesem die darin enthaltene Wärmeenergie für die endotherme Para-Ortho-Umwandlung entzogen wird. Auf diese Weise kann eine für eine notwendige Druckentlastung erforderliche Menge an abzulassendem Wasserstoff relativ klein gehalten werden. So werden Abdampfverluste minimiert.

Insbesondere kann der Wärmetauscher vorzugsweise um mindestens ein Viertel, mindestens ein Drittel oder sogar mindestens die Hälfte einer maximalen Abmessung des Tankraums in den Tankraum hineinragen und/oder um höchstens drei Viertel oder höchstens zwei Drittel der maximalen Abmessung des Tankraums. So kann ein hoher Wirkungsgrad des Wärmetauschers erreicht werden bzw. ein relativ großer Tankraumbereich frei vom Wärmetauscher sein, so dass eine entsprechend große Menge an flüssigem Wasserstoff kontaktfrei zum Wärmetauscher im Tankraum gelagert sein kann.

Der Wärmetauscher kann dazu eingerichtet sein, einen zur Wärmeübertragung vorgesehenen Stoffstrom durch das Zentrum eines im Tankraum enthaltenen Ringraums axial (also in eine Richtung, die eine Richtungskomponente parallel zu einer zentralen Ringraumachse aufweist) hindurch zu führen; es versteht sich, dass der Ringraum dabei abstrakt definiert sein kann, seine Begrenzung also nicht physisch vorhanden sein muss. Der Ringraum umgibt bei derartigen Ausführungsformen also einen entsprechenden Bereich, durch den der Wärmetauscher führt. Anders formuliert ist ein entsprechender Abschnitt des Wärmetauschers dann in alle Richtungen, die senkrecht zur Richtung des zur Wärmeübertagung vorgesehenen Stoffstroms stehen, vom Tankraum umgeben, insbesondere freiliegend.

Der Para-Ortho-Katalysator kann beispielsweise Eisenoxid, Nickel-Silizium, Chromtrioxid und/oder ein poröses magnetisches Material umfassen.

Der Raumfahrzeugtank ist vorzugsweise dazu eingerichtet, Wasserstoff in flüssigem Zustand und/oder mit einem Druck unterhalb eines kritischen Drucks von 13 bar, vorzugsweise sogar unterhalb eines Drucks von 12bar oder sogar von llbar zu bevorraten. Er kann mindestens teilweise aus Leichtbaumaterial (beispielsweise mindestens einer Aluminiumlegierung und/oder mindestens einem Faserverbundwerkstoff) gefertigt sein und/oder in Leichtbauweise (insbesondere mit voneinander beabstandeten kraftaufnehmenden Materialschichten, zwischen denen ein Hohlraum und/oder ein Material mit einer geringeren Dichte als das der Materialschichten angeordnet ist).

Vorzugsweise ist der Wärmetauscher eines erfindungsgemäßen Raumfahrzeugtanks dazu eingerichtet, zumindest bei Temperaturen im Bereich von 50K bis 200K Para-Wasserstoff bis zum Erreichen eines Verhältnisses V von Ortho- zu Para-Wasserstoff umzuwandeln, das von einem jeweiligen (von der jeweiligen Temperatur T abhängigen) Gleichgewichtsverhältnis G(T) um höchstens 10% oder um höchstens 5% abweicht. Das gemäß einem erfindungsgemäßen Verfahren abgelassene Wasserstoffgemisch weist analog vorzugsweise ein Verhältnis V von Ortho- zu Para-Wasserstoff auf, das von einem jeweiligen (von der jeweiligen Temperatur T abhängigen) Gleichgewichtsverhältnis G(T) um höchstens 10% oder um höchstens 5% abweicht. Es gilt bei derartigen Ausführungsformen also jeweils V ≥ 0,9 G(T) bzw. V ≥ 0,95 G(T).

Derartige Ausführungsformen ermöglichen eine besonders hohe Effektivität der Kühlung, weil die endotherme Umwandlung zumindest annähernd vollständig erfolgt und somit besonders viel Wärme des Tankinhalts aufgenommen wird.

Gemäß vorteilhaften Ausführungsformen der vorliegenden Erfindung ist der Wärmetauscher mindestens teilweise in einem Zentrum des Tankraumes angeordnet; insbesondere kann der Wärmetauscher also bis in das Zentrum hineinragen, also einen Abschnitt aufweisen, der im Zentrum liegt. Auf diese Weise kann erreicht werden, dass der Wärmetauscher zumindest während Schubphasen und/oder während ballistischer Phasen eines den Raumfahrzeugtank umfassenden Raumfahrzeugs zumindest teilweise oder vollständig von gasförmigem Wasserstoff umgeben, insbesondere im Tankleerraum (Ullage) angeordnet ist. Während dieser Phasen wird nämlich der flüssige Wasserstoff aufgrund der Trägheit gegen einen jeweiligen Tankwandbereich gedrückt, und zwar während Schubphasen an einen der Beschleunigungsrichtung entgegengesetzten Tankwandbereich und während ballistischer Phasen aufgrund einer Rotation des Raumfahrzeugs um seine zentrale Raumfahrzeugachse gegen einen bezüglich dieser Achse radial am weitesten außen liegenden Tankwandbereich.

Insbesondere kann der Tankraum vorzugsweise mindestens teilweise rotationssymmetrisch bezüglich einer zentralen Tankraumachse ausgebildet sein. In einem erfindungsgemäßen Raumfahrzeug mit einem solchen Raumfahrzeugtank ist dieser vorzugsweise so eingebaut, dass die zentrale Tankraumachse mit einer (vorgesehenen) Flugrichtung des Raumfahrzeugs übereinstimmt.

Der Wärmetauscher derartiger Ausführungsformen mit mindestens teilweise rotationssymmetrischem Tankraum kann mindestens teilweise innerhalb eines kreiszylindrischen Tankraumbereichs angeordnet sein, dessen zentrale Achse mit der zentralen Tankraumachse übereinstimmt. Ein zugehöriger Kreiszylinderradius eines solchen Tankraumbereichs kann dabei vorzugsweise höchstens ein Drittel, höchstens ein Viertel oder höchstens ein Fünftel eines senkrecht zur zentralen Tankraumachse maximal auftretenden Radius des Tankraums betragen. So kann auch bei einem relativ großen Anteil an flüssigem Wasserstoff im Tankraum erreicht werden, dass der Wärmetauscher während ballistischer Phasen von gasförmigem Wasserstoff umgeben ist. Es versteht sich, dass der kreiszylindrische Tankraumbereich dabei abstrakt definiert ist, seine Begrenzung also nicht physisch vorhanden sein muss.

Alternativ oder zusätzlich kann der Raumfahrzeugtank eine vorgesehene Flugrichtung aufweisen, indem er dazu eingerichtet ist, in einer vorgesehenen Einbauausrichtung im Raumfahrzeug eingebaut zu werden: Die vorgesehene Flugrichtung des Raumfahrzeugtanks ist dann also durch eine vorgesehene Flugrichtung des Raumfahrzeugs (mit dem darin in vorgesehener Einbauausrichtung eingebauten Raumfahrzeugtank) bestimmt.

Vorzugsweise ist ein bezogen auf die vorgesehene Flugrichtung hinterer Bereich des Tankraums bei solchen Ausführungsformen frei vom Wärmetauscher und hat dabei in Richtung der vorgesehenen Flugrichtung eine maximale Abmessung, die mindestens ein Viertel bzw. mindestens ein Drittel einer (entlang der vorgesehenen Flugrichtung gemessenen) maximalen Abmessung des Tankraums (insgesamt) beträgt. Somit kann während Schubphasen entsprechend viel flüssiger Wasserstoff ohne Kontakt zum Wärmetauscher in diesen hinteren Bereich gedrückt werden.

In vorteilhaften Ausführungsformen eines erfindungsgemäßen Raumfahrzeugs mit einem solchen Raumfahrzeugtank ist dieser vorzugsweise in seiner vorgesehenen Einbauausrichtung im Raumfahrzeug verbaut.

Gemäß vorteilhaften Ausführungsformen der vorliegenden Erfindung umfasst der Wärmetauscher eine Rohrschlange zum Hindurchleiten von Wasserstoff auf seinem Weg durch das Druckentlastungssystem bzw. aus dem Tank; ein erfindungsgemäßes Verfahren kann entsprechend ein Hindurchleiten von gasförmigem Wasserstoff aus dem Tankraum durch einen solchen Wärmetauscher umfassen. Der Para-Ortho-Katalysator ist bei solchen Ausführungsvarianten vorzugsweise zumindest in einem Innenbereich der Rohrschlange angeordnet, beispielsweise in Form einer Beschichtung, die z.B. poröses magnetisches Material, Eisenoxid, Nickel-Silizium und/oder Chromtrioxid umfassen kann. So kann die beschleunigte Para-Ortho-Umwandlung im Inneren der Rohrschlange erfolgen und insbesondere der entstandene Ortho-Wasserstoff danach direkt in eine Umgebung des Raumfahrzeugtanks oder sogar des Raumfahrzeugs abgeführt und abgelassen werden.

Insbesondere kann eine solche Rohrschlange einer dreidimensionalen Kurve folgen. Sie kann eine oder mehrere Windungen aufweisen, z.B. um eine (ggf. gemeinsame) Achse herum, wobei sie eine Richtungskomponente in Richtung der Achse aufweisen kann.

Insbesondere kann die Rohrschlange beispielsweise mindestens bereichsweise entlang einer Helix verlaufen. Dies ermöglicht eine vorteilhaft lange Rohrschlange innerhalb eines relativ kleinen Raums. In Ausführungsformen mit rotationssymmetrischem Tankraum wie oben erwähnt kann eine zentrale Achse einer solchen Helix insbesondere mit der zentralen Tankraumachse übereinstimmen.

Gemäß vorteilhaften Ausführungsformen eines erfindungsgemäßen Raumfahrzeugtanks ist im Tankraum mindestens ein Ventilator angeordnet; ein erfindungsgemäßes Verfahren kann analog ein Verwirbeln des gasförmigen Wasserstoffs im Raumfahrzeugtank mittels mindestens eines Ventilators umfassen. Auf diese Weise können jeweils Temperaturschichten im gasförmigen Wasserstoff im Tankraum aufgebrochen werden, die insbesondere bei ballistischem Flug eines den Raumfahrzeugtank umfassenden, um seine zentrale Raumfahrzeugachse rotierenden Raumfahrzeugs auftreten können.

Gemäß vorteilhaften Ausführungsformen der vorliegenden Erfindung ist der Wärmetauscher in mindestens einem Bereich thermisch gekoppelt an eine Tankstruktur angebunden, vorzugsweise an eine den Tankraum umgebende bzw. begrenzende Tankwand. Auf diese Weise kann die Tankstruktur vom Wärmetauscher ebenfalls mitgekühlt werden, was einen Wärmeeintrag in den Tankinhalt reduziert; ein erfindungsgemäßes Verfahren kann dann entsprechend eine Kühlung mindestens einer Tankstruktur mittels des thermisch gekoppelt angebundenen Wärmetauschers umfassen.

Insbesondere in Ausführungsformen, bei denen der Wärmetauscher wie oben erwähnt eine Rohrschlange umfasst, kann diese ein einem Auslass des Druckentlastungssystems zugewandtes Ende aufweisen, das thermisch gekoppelt an eine Tankstruktur (z.B. eine Tankwand) angebunden ist. Der dann mit der Kühlung der Tankstruktur einhergehende Wärmestrom zum genannten Ende der Rohrschlange verhindert so vorteilhaft, dass der Wasserstoff auf seinem Weg durch den Wärmetauscher auf eine Temperatur abkühlt, die so niedrig ist, dass zum Erreichen des Gleichgewichtsverhältnisses eine unerwünschte exotherme Rückumwandlung von Ortho- in Para-Wasserstoff stattfindet. Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:

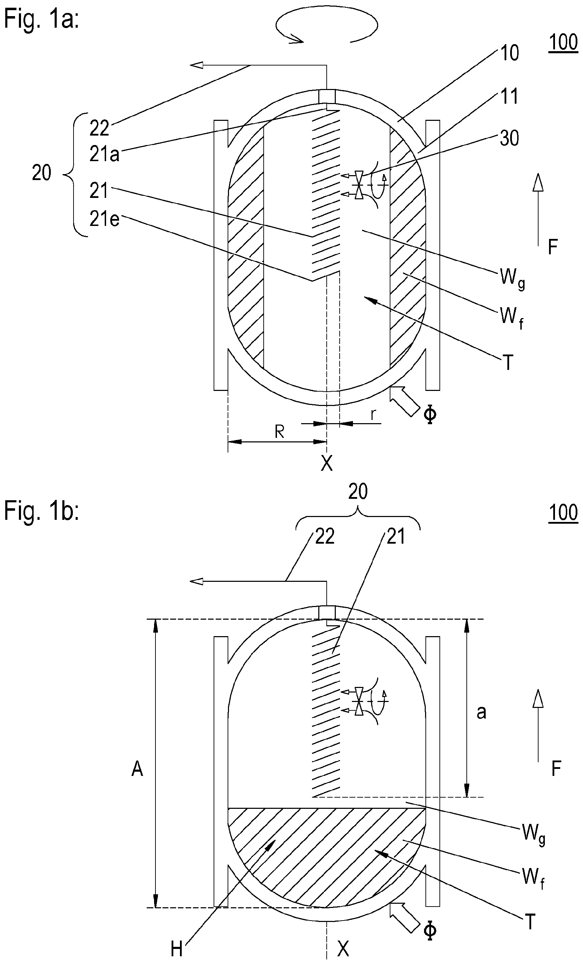

- Fig. 1a:: eine exemplarische Ausführungsform eines erfindungsgemäßen Raumfahrzeugtanks während einer ballistischen Flugphase mit Spin; und
- Fig. 1b:: den Raumfahrzeugtank der Figur 1a während einer Schubphase.

Die Figur 1a zeigt ein Ausführungsbeispiel eines erfindungsgemäßen Raumfahrzeugtanks 100 in einem schematischen Längsschnitt. Der Raumfahrzeugtank 100 umfasst eine Tankstruktur 10, die einen Tankraum T begrenzt, in dem vorliegend flüssiger Wasserstoff W_{f} und gasförmiger Wasserstoff W_{g} fast ausschließlich (beispielsweise zu 99,8%) in Form von Para-Wasserstoff gelagert sind. Der Tankraum ist dabei vorliegend rotationssymmetrisch um eine zentrale Tankraumachse X ausgebildet, deren Richtung mit einer (vorgesehenen) Flugrichtung F des Raumfahrzeugstanks übereinstimmt; die vorgesehene Flugrichtung bestimmt sich dabei aus einer für den Wasserstofftank 100 vorgesehenen Einbauausrichtung in einem (nicht dargestellten) Raumfahrzeug (und dessen vorgesehener Flugrichtung).

Der Raumfahrzeugtank 100 umfasst weiterhin ein Druckentlastungssystem 20 mit einem Wärmetauscher 21, der vorliegend als eine Rohrschlange ausgebildet ist, die sich in einem Abschnitt entlang einer Helix um die zentrale Tankraumachse X windet. Durch einen Rohreingang 21e kann dabei gasförmiger Wasserstoff W_{g} in die Rohrschlange eintreten, durch die Rohrschlange geleitet sowie durch einen Auslass 22 des Druckentlastungssystems 20 in eine Umgebung des Raumfahrzeugtanks 100 oder sogar eines den Raumfahrzeugtank umfassenden Raumfahrzeugs (nicht dargestellt) abgelassen werden. Eine weitere Kühlung wird durch den Wärmetauscher 21 erreicht: Dieser weist erfindungsgemäß einen Para-Ortho-Katalysator zur beschleunigten Umwandlung von Para- in Ortho-Wasserstoff auf (in den Figuren nicht sichtbar). Vorliegend ist der Para-Ortho-Katalysator dabei im Inneren der Rohrschlange angeordnet. Das am Rohreingang 21e fast vollständig aus Para-Wasserstoff bestehende Wasserstoffgas W_{g} wird dadurch bei seiner Durchleitung durch die Rohrschlange teilweise in Ortho-Wasserstoff umgewandelt, und zwar vorzugsweise bis zu einem Erreichen des Gleichgewichtsverhältnisses (von Ortho- zu Para-Wasserstoff) für die jeweilige Temperatur. Für die endotherme Umwandlung erforderliche Wärme wird dabei aus einer Umgebung der Rohrschlange im Tankraum T aufgenommen. Dadurch wird das die Rohrschlange umgebende Wasserstoffgas W_{g} im Tankraum gekühlt.

Insgesamt kann so unter Minimierung von Abdampfverlusten ein Wärmefluss Φ von außerhalb des Raumfahrzeugtanks 100 in die Tankstruktur 10 mindestens teilweise kompensiert werden, indem der gasförmige Wasserstoff W_{g} auf ein niedriges Temperaturniveau gebracht und dort stabilisiert wird.

Das Ablassen mindestens eines Teils des bei der Umwandlung entstandenen Wasserstoffgemischs und damit der Vorgang der Druckentlastung kann während des Betriebs der Raumfahrzeugtanks mehrfach wiederholt werden oder auch kontinuierlich erfolgen.

In der in Figur 1a gezeigten Situation ist ein den Raumfahrzeugtank 100 umfassendes (nicht dargestelltes) Raumfahrzeug in einer ballistischen (also nicht angetriebenen) Flugphase, in der es um eine zentrale Raumfahrzeugachse rotiert, die vorliegend mit der zentralen Tankraumachse X übereinstimmt. Die (in der Figur durch einen Pfeil illustrierte) Rotation kann beispielsweise mit einer Geschwindigkeit erfolgen, die im Bereich von mindestens 0,5° pro Sekunde, mindestens 15° pro Sekunde oder auch mindestens 40° pro Sekunde liegt. Als Folge der Rotation wird der flüssige Wasserstoff W_{f} durch Fliehkraft an einen die Rotationsachse ringartig umlaufenden Bereich 11 der Tankstruktur 10 gedrückt.

Mittels eines im Tankraum T angeordneten Ventilators 30 können bei der gezeigten Ausführungsform sich im Tankraum T einstellende Temperaturschichten im gasförmigen Wasserstoff W_{g} aufgebrochen und damit ein Wirkungsgrad des Wärmetauschers 21 verbessert werden.

Im dargestellten Ausführungsbeispiel ist der Wärmetauscher 21 innerhalb eines um die zentrale Tankraumachse X liegenden kreiszylindrischen Tankraumbereichs angeordnet, dessen Radius r weniger als ein Viertel, vorliegend sogar weniger als ein Sechstel eines maximal auftretenden Radius R des Tankraums T beträgt. Dadurch wird ein Kontakt des Wärmetauschers 21 mit flüssigem Wasserstoff W_{g} in der gezeigten Flugphase verhindert.

Ein Bereich 21a des Wärmetauschers 21, nämlich vorliegend ein dem Auslass 22 des Druckentlastungssystems 20 zugewandtes Ende der Rohrschlange ist vorzugsweise thermisch gekoppelt an die Tankstruktur 10 des Raumfahrzeugtanks 100 angebunden (in der Figur nicht sichtbar), vorzugsweise in einem Tankstrukturbereich mit besonders hohem äußerem Wärmeeintrag. So kann die Tankstruktur 10 selbst gekühlt sowie verhindert werden, dass die Temperatur des Wasserstoffgases auf dessen Weg durch die Rohrschlange so weit absinkt, dass zum Erreichen des für die dort dann vorliegende Temperatur geltenden Gleichgewichtsverhältnisses eine unerwünschte exotherme Rückumwandlung von Ortho- in Para-Wasserstoff erfolgt.

Die Figur 1b zeigt den Raumfahrzeugtank 100 der Figur 1a in einer entsprechenden Schnittdarstellung während einer Schubphase eines den Raumfahrzeugtank 100 umfassenden (nicht dargestellten) Raumfahrzeugs. Dabei wird der flüssige Wasserstoff W_{f} in eine der Flugrichtung F entgegengesetzte Richtung an die Tankstruktur 10 gedrückt.

Der Wärmetauscher 21 ragt dabei im gezeigten Ausführungsbeispiel um die Länge a und damit um mehr als ein Viertel, vorliegend sogar mehr als die Hälfte einer maximalen Abmessung A des Tankraums T in diesen hinein. Dadurch weist der Wärmetauscher 21 einen besonders hohen Wirkungsgrad bei der Kühlung des ihn im Tankraum T umgebenden gasförmigen Wasserstoffs W_{g} auf. Die maximale Abmessung A ergibt sich im dargestellten Fall als Abmessung des Tankraums entlang der zentralen Tankraumachse X.

Zugleich ragt der Wärmetauscher 21 vorliegend aber um weniger als drei Viertel, vorliegend sogar weniger als zwei Drittel der maximalen Abmessung A des Tankraums T in diesen hinein. Ein bezogen auf die Flugrichtung F hinterer Bereich H des Tankraums, der frei vom Wärmetauscher 21 ist, hat so eine maximale Abmessung in Flugrichtung F, die mehr als ein Viertel, vorliegend sogar mehr als ein Drittel der Abmessung A beträgt. Dadurch wird beim gegebenen Füllstand des Raumfahrzeugtanks 100 ein Kontakt des Wärmetauschers 21 mit flüssigem Wasserstoff W_{g} in der gezeigten Schubphase verhindert.

Offenbart ist ein Raumfahrzeugtank 100 für Wasserstoff. Der Raumfahrzeugtank 100 weist ein Druckentlastungssystem 20 zum Ablassen von gasförmigem Wasserstoff W_{g} aus einem Tankraum T auf, das einen in mindestens einem Abschnitt in den Tankraum T hineinragenden Wärmetauscher 21 mit einem Para-Ortho-Katalysator zur beschleunigten Umwandlung von Parain Ortho-Wasserstoff umfasst. Weiterhin offenbart ist ein Raumfahrzeug mit einem Wasserstoffantrieb und einem solchen Raumfahrzeug 100.

Offenbart ist weiterhin ein Verfahren zum Kühlen eines Tankinhalts mit flüssigem Wasserstoff W_{f} und gasförmigem Wasserstoff W_{g} in einem Tankraum T eines Raumfahrzeugtanks 100, der ein Druckentlastungssystem 20 mit einem in mindestens einem Abschnitt in den Tankraum T hineinragenden, einen Para-Ortho-Katalysator zur beschleunigten Umwandlung von Para- in Ortho-Wasserstoff aufweisenden Wärmetauscher 21 umfasst. Das Verfahren umfasst ein Umwandeln von Para-Wasserstoff in Ortho-Wasserstoff mittels des Wärmetauschers 21 sowie ein Ablassen mindestens eines Teils eines bei der Umwandlung entstehenden Wasserstoffgemischs.

### Bezugszeichen

- 10: Tankstruktur
- 11: ringartiger Bereich der Tankstruktur

- 20: Druckentlastungssystem
- 21: Wärmetauscher
- 21a: thermisch an Tankstruktur angebundener Bereich des Wärmetauschers
- 21e: Rohreingang
- 22: Auslass des Druckentlastungssystems

- 100: Raumfahrzeugtank

- Φ: Wärmefluss von außerhalb des Raumfahrzeugtanks

- a: Abmessung des Wärmetauschers in die (vorgesehene) Flugrichtung F
- A: Abmessung A des Tankraums T in die (vorgesehene) Flugrichtung F
- F: (vorgesehene) Flugrichtung
- H: hinterer Bereich des Tankraums
- r: Radius eines den Wärmetauscher umfassenden kreiszylindrischen Bereichs
- R: maximaler Radius des Tankraums T
- T: Tankraum
- W_{f}: flüssiger Wasserstoff
- W_{g}: gasförmiger Wasserstoff
- X: zentrale Tankraumachse

## Patentansprüche

1. Raumfahrzeugtank (100) für Wasserstoff, wobei der Raumfahrzeugtank ein Druckentlastungssystem (20) zum Ablassen von gasförmigem Wasserstoff (W_{g}) aus einem Tankraum (T) aufweist, das einen in mindestens einem Abschnitt in den Tankraum (T) hineinragenden Wärmetauscher (21) mit einem Para-Ortho-Katalysator zur beschleunigten Umwandlung von Para- in Ortho-Wasserstoff umfasst.

2. Raumfahrzeugtank gemäß Anspruch 1, wobei der Wärmetauscher (21) mindestens teilweise in einem Zentrum des Tankraumes (T) angeordnet ist.

3. Raumfahrzeugtank gemäß einem der Ansprüche 1 oder 2, wobei der Wärmetauscher (21) eine Rohrschlange zum Hindurchleiten von Wasserstoff auf seinem Weg aus dem Tankraum (T) umfasst.

4. Raumfahrzeugtank gemäß Anspruch 3, wobei die Rohrschlange mindestens teilweise einer dreidimensionalen Kurve folgend ausgebildet ist.

5. Raumfahrzeugtank gemäß einem der vorhergehenden Ansprüche, der zudem mindestens einen im Tankraum (T) angeordneten Ventilator (30) umfasst.

6. Raumfahrzeugtank gemäß einem der vorhergehenden Ansprüche, wobei der Wärmetauscher (21) in mindestens einem Bereich (21a) thermisch gekoppelt an eine Tankstruktur (10) angebunden ist.

7. Raumfahrzeug mit einem Wasserstoffantrieb und einem Raumfahrzeugtank (100) gemäß einem der vorhergehenden Ansprüche zur Versorgung des Wasserstoffantriebs.

8. Verfahren zum Kühlen eines Tankinhalts mit flüssigem Wasserstoff (W_{f}) und gasförmigem Wasserstoff (W_{g}) in einem Tankraum (T) eines Raumfahrzeugtanks (100), der ein Druckentlastungssystem (20) mit einem in mindestens einem Abschnitt in den Tankraum (T) hineinragenden, einen Para-Ortho-Katalysator zur beschleunigten Umwandlung von Para- in Ortho-Wasserstoff aufweisenden Wärmetauscher (21) umfasst, wobei das Verfahren ein Umwandeln von Para-Wasserstoff in Ortho-Wasserstoff mittels des Wärmetauschers (21) sowie ein Ablassen mindestens eines Teils eines bei der Umwandlung entstandenen Wasserstoffgemischs umfasst.

9. Verfahren gemäß Anspruch 8, wobei das Umwandeln nach einer Schubphase und/oder während einer ballistischen Phase eines den Raumfahrzeugtank (100) umfassenden Raumfahrzeugs erfolgt.

10. Verfahren gemäß einem der Ansprüche 8 oder 9, das zudem ein Verwirbeln des gasförmigen Wasserstoffs (W_{g}) im Raumfahrzeugtank (100) mittels mindestens eines Ventilators (30) umfasst.
